# EUROPÄISCHE PATENTSCHRIFT

(11) **EP 2 174 971 B1**
(45) Veröffentlichungstag und Bekanntmachung des Hinweises auf die Patenterteilung: **03.08.2016**
(21) Anmeldenummer: 09168535.4
(22) Anmeldetag: 25.08.2009
(51) Int. Cl.: C08G 65/00

(54) **Polymere Werkstoffe sowie daraus bestehende Kleber- und Beschichtungsmittel auf Basis multialkoxysilylfunktioneller Präpolymerer**
Polymer materials and adhesive and coating agents composed of same on a multialkoxysilylfunctional prepolymer basis
Matière active polymère et matière adhésive et de revêtement en étant issue à base de prépolymères à alkoxysilyle multiple fonctionnel

(30) Priorität: 24.09.2008 DE 102008042310; 28.10.2008 DE 102008043218
(43) Veröffentlichungstag der Anmeldung: 14.04.2010
(73) Patentinhaber: Evonik Degussa GmbH, 45128 Essen (DE)
(72) Erfinder: Knott, Wilfried, 45355, Essen (DE); Schubert, Frank, 47506, Neukirchen-Vluyn (DE); Glos, Martin, 46325, Borken (DE); Schiller, Carsten, 45470, Mülheim an der Ruhr (DE); Naumann, Matthias, Greensboro, NC 27407 (US)

(56) Entgegenhaltungen:
- EP-A- 0 372 561
- EP-A- 1 285 946
- EP-A- 1 964 878
- EP-A- 2 093 244
- US-A1- 2003 023 949

## Beschreibung

Die Erfindung betrifft alkoxysilanfunktionelle Präpolymere und ein Verfahren zum Verkleben oder Beschichten von Oberflächen mit einer gegebenenfalls schäumbaren Mischung enthaltend diese alkoxysilanfunktionellen Präpolymere. Der Gejenstand der vorliegenden Erfindung ist in der anhängenden Ansprüschen 1-9 definiert. Im Gebiet der Verklebung oder Beschichtung von Flächengebilden wurden vielfältige Anstrengungen unternommen, zu gesteuert abbindenden Systemen zu gelangen, die in Abhängigkeit vom Anwendungsgebiet ein optimiertes Härte-/Abbindungsverhalten zeigen.

Die Isocyanat-basierten Systeme, die unter Ausbildung von Polyurethanen zur Verklebung/Beschichtung von Flächen genutzt werden, sind wegen der toxikologischen Bedenklichkeit der Isocyanate in Verruf gekommen und müssen teilweise ersetzt werden.

Dazu wurden verschiedene Wege vorgeschlagen.

Einerseits wird die Isocyanatgruppe geschützt und nur während der Vernetzung/Polymerisation in situ umgesetzt, indem Allophanat- oder Biuretstrukturen genutzt werden, andererseits werden neuartige Kleb- und Beschichtungsmittel genutzt, die vollkommen frei von Isocyanaten sind oder aber diese zumindest teilweise ersetzen.

Interessanterweise konnten im Rahmen der vorliegenden Erfindung sogar neuartige Alkoxysilylgruppen tragende Präpolymere entwickelt werden, die sowohl gegenüber Polyolen reaktiv sind, aber auch mit den Isocyanat-basierten Systemen und deren auf Biuret- oder Allophanatstrukturen basierenden Folgesystemen in Reaktion treten können und damit neuartige, vielfältige Anwendungsgebiete erschließen helfen, die in ausgewogener Art und Weise steuerbar gewünschte Verklebungen oder Beschichtungen ermöglichen.

Präpolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilanterminierten Präpolymere bereits bei Raumtemperatur in der Lage, unter Abspaltung der Alkoxygruppen und Ausbildung einer Si-O-Si-Bindung miteinander zu kondensieren. Somit lassen sich diese Präpolymere u.a. als einkomponentige Systeme verwenden, welche den Vorteil einer einfachen Handhabung besitzen, da keine zweite Komponente zudosiert und eingemischt werden muss.

Auch sind alkoxysilanfunktionelle Polyurethane, die über eine Silanpolykondensation vernetzen, ebenfalls lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.

Solche alkoxysilanfunktionellen Polyurethane können gemäß US 3,627,722 oder US 3,632,557 hergestellt werden, indem z.B. Polyetherpolyole mit einem Überschuss Polyisocyanat zu einem NCO-haltigen Präpolymer umgesetzt werden, das dann wiederum mit einem aminofunktionellen Alkoxysilan weiter umgesetzt wird. Das entstehende alkoxysilanfunktionelle Präpolymer enthält Harnstoff und Urethangruppen in hoher Konzentration, die zu einer hohen Viskosität der Produkte führen.

Allophanate werden in der Technik durch die Umsetzung eines ein- oder mehrwertigen Alkohols mit großen Mengen an überschüssigem aromatischen, aliphatischen und/oder cycloaliphatischen Diisocyanat hergestellt (vgl. GB A 994 890, US 3,769,318, EP A 0 000 194 oder EP A 0 712 840). Hier werden ausschließlich Di- oder Polyisocyanate eingesetzt, um wiederum ein isocyanatfunktionelles Bindemittel zu erhalten. Um eine vorzeitige Vernetzung zu unterbinden, ist es notwendig, einen Überschuss an Polyisocyanat zu verwenden, der nach erfolgter Urethanisierung und Allophanatisierung mittels Abdestillation im Vakuum entfernt werden muss. Bei diesem Konzept ist über den Allophanat-Stickstoff eine weitere Isocyanat-Gruppe als funktionelle Gruppe verknüpft. Die Tatsache, dass Polyisocyanate mit Allophanatstrukturen verglichen mit Analogen ohne Allophanatstrukturen relativ niedrigviskos sind, wird in der Literatur vielfältig, beispielsweise in EP B 0 682 012, beschrieben. Es ist ebenfalls möglich, Allophanate indirekt, aus anderen Isocyanatderivaten als Urethanen und Isocyanaten herzustellen. So beschreibt die EP A 0 825 211 ein Verfahren zum Aufbau von Allophanatstrukturen aus Oxadiazintrionen; ein weiterer Weg ist die Öffnung von Uretdionen (vgl. Proceedings of the International Waterborne, High-Solids, and Powder Coatings Symposium 2001, 28, 405-419 sowie US-A-2003 0153713) zu AllophanatStrukturen. Beide Wege benötigen allerdings veredelte Rohstoffe als Ausgangsmaterial und führen nur zu einem an Nebenprodukten reichen Allophanatprodukt. Auch werden beim Aufbau der Vorstufen ausschließlich mindestens difunktionelle Polyisocyanate eingesetzt. Auch die Verwendung von Monoisocyanaten wurde schon im Zusammenhang mit der Allophanatchemie offenbart. In den Anmeldungen US 5,663,272 und US 5,567,793 wird Phenylisocyanat verwendet, um nach Umsetzung mit einem polyfunktionellen Alkohol zu einem NCO- und OH-Gruppenfreien Urethan zu gelangen, das anschließend durch Allophanatisierung mit speziellen MDI-Typen zu einem flüssigen MDI-Polyisocyanat modifiziert wird. Bei dieser Vorgehensweise enthält das Produkt vor der Weiterverarbeitung monomeres Diisocyanat.

Die WO 2007/025667 beschreibt weiterhin modifizierte Alkoxysilangruppen aufweisende Polyurethanpräpolymere, die eine deutlich reduzierte Viskosität aufweisen sollen. Derartige Präpolymere mit Allophanat und/oder Biuretstrukturen, deren Allophanat- und/oder Biuretstrukturen zu wenigstens 10 mol-% von einem Monoisocyanat der allgemeinen Formel R-NCO abgeleitet sind, wobei R ein gegebenenfalls heteroatomhaltiger Alkyl-, Aralkyl oder Arylrest mit bis zu 20 C-Atomen ist und wobei diese Reste neben der als Teil der Allophanatstruktur vorliegenden NCO-Funktion und gegebenenfalls vorhandener Alkoxysilylgruppen keine weiteren Funktionalitäten aufweisen, können auf recht einfache Weise hergestellt werden, indem man Urethangruppen und/oder Harnstoffgruppen eines Polyurethanpräpolymers, welches alkoxysilangruppenhaltig sein kann, mit Monoisocyanaten unter anteiliger oder vollständiger Allophanatisierung bzw. Biuretisierung dieser Gruppen umsetzt. Nachteilig bei diesen Präpolymeren ist allerdings die relativ geringe Dichte an Funktionalisierung, die zur Vernetzung bereitgestellt wird.

Die Reaktivität der verkappten Isocyanate mit Biuret- oder Allophanatstruktur ist verglichen mit den freien Isocyanaten verständlicherweise deutlich geringer, kann allerdings durch Zugabe geeigneter Katalysatoren anwendungsbedingt optimiert werden.

Demgegenüber besteht ein weiterer Vorteil von alkoxysilanfunktionellen Präpolymeren in der Tatsache, dass bei der Härtung weder Säuren noch Oxime oder Amine freigesetzt werden. Außerdem entsteht anders als bei Kleb- oder Dichtstoffen auf Isocyanatbasis kein gasförmiges CO₂, durch dessen Entstehung nach dem Verkleben von Bauteilen die Klebemasse nachträglich noch expandieren würde. Des Weiteren sind alkoxysilanfunktionelle Präpolymermischungen im Gegensatz zu isocyanatbasierenden Systemen toxikologisch unbedenklich.

Bei einem besonders vorteilhaften Typ von alkoxysilanfunktionellen Präpolymeren handelt es sich um alkoxysilanterminierte Präpolymere. Diese können aus unterschiedlichen Bausteinen aufgebaut sein. Üblicherweise besitzen diese Präpolymere ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in EP 0 372 561, WO 00/37533 oder US 6,207,766. Daneben sind aber auch Systeme weit verbreitet, deren Rückgrat ganz oder zumindest zum Teil aus Organosiloxanen besteht, beschrieben u.a. in WO 96/34030.

Bei einem besonders vorteilhaften Herstellverfahren für alkoxysilanterminierte Präpolymere wird von Polyolen, z.B. von Polyether- oder Polyesterpolyolen, ausgegangen, die in einem ersten Reaktionsschritt mit einem Überschuss eines Di- oder Poly-isocyanates umgesetzt werden. Anschließend werden die dabei erhaltenen isocyanatterminierten Präpolymere mit aminoalkylfunktionelien Alkoxysilanen zu dem gewünschten alkoxysilanterminierten Präpolymer umgesetzt. Alternativ können alkoxysilanterminierte Präpolymere auch hergestellt werden, indem ein Polyol oder ein OHfunktionktionelles Polyurethan, wie es durch die Reaktion von Polyolen mit einem Unterschuss an Di- oder Polyisocyanaten herstellbar ist, mit einem isocyanatoalkylfunktionellen Alkoxysilan umgesetzt wird. Diese Herstellverfahren sind beispielsweise in EP 1 421 129 oder WO 2005/000931 beschrieben. Auch weitere Herstellverfahren, z.B. die in WO 02/034838 beschriebene Umsetzung von aminofunktionellen Polyolen mit Carba-matoalkyl-alkoxysilanen, sind vorstellbar.

Des Weiteren sind auch alkoxysilanfunktionelle Präpolymere mit einem Poly-(meth-)acrylatrückgrat bekannt. Diese werden typischerweise durch eine Copolymerisation von (Meth-)Acryloxyalkylalkoxysilanen mit anderen (Meth-)Acrylmonomeren und/oder weiteren ungesättigten Monomerbausteinen, wie z.B. Styrol, aufgebaut.

Zudem können alkoxysilanfunktionelle Polymere auch durch nachträgliches Aufpfropfen von ungesättigen Alkoxysilanen, z.B. von Vinyl- oder (Meth-)Acrylsilanen, hergestellt werden.

Neben einem Einsatz als Klebstoff ist auch die Verwendung von alkoxysilanfunktionellen Präpolymeren zur Herstellung von silanvernetzenden Hart- und Weichschäumen, insbesondere von isocyanat-freien sprühbaren Montageschäumen bekannt und z.B. in EP 1 098 920 B1 oder EP 1 363 960 B1 beschrieben. Diese Sprühschäume werden typischerweise aus Druckdosen appliziert und dienen vor allem zum Abdichten von Fensterfugen, als Füll- und Befestigungsmaterial für Türzargen oder allgemein zum Verfüllen und Abdichten von Hohlräumen im Bauwerk. Entsprechend dieser Anwendungen zeichnen sie sich durch eine möglichst niedrige Schaumdichte, d.h. einer möglichst großen Volumenausbeute pro Schaumdose und damit einer möglichst großen Ergiebigkeit aus. Die niedrigen Schaumdichten werden dabei durch eine Zugabe von einer möglichst großen Menge physikalischer Treibmittel (d.h. in der Schaumdose unter Druck verflüssigter Gase, die beim Sprühprozess die Schaumbildung treiben) erreicht. Für einen Einsatz in herkömmlichen Klebeanwendungen sind derartige Sprühschäume ungeeignet, vor allem weil sie nach ihrer Verschäumung zunächst über keine nennenswerte Anfangsmechanik verfügen und die zu verklebenden Werkstücke dementsprechend über extrem lange Zeiträume fixiert werden müssten.

Die DE 10 2006 054 155 lehrt ein Verfahren zum Verkleben von Oberflächen, bei dem eine schäumbare Mischung, die Präpolymere mit ausschließlich endständigen und isolierten Alkoxysilylgruppen sowie einer basischen Gruppe im Molekül, wie beispielsweise NH₂-, NHR³-, oder N(R³)₂-Gruppe sowie Treibmittel enthält, auf einer der zu verklebenden Oberflächen oder zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Die Lehre der DE 10 2006 054 155 sieht weiterhin vor, den bereits in der Copolymerstruktur vertretenen Trialkoxysilyleinheiten zur Verstärkung des durch sie eingetragenen Effekts weitere freie Silane als zusätzliche Komponenten hinzuzufügen, die mehrere Funktionen übernehmen können. Es wird deren Rolle als Wasserfänger (Verbesserung der Lagerstabilität), als Vernetzer und/oder Reaktivverdünner (Steigerung der Netzwerkdichte und damit Verbesserung der mechanischen Eigenschaften, z.B. der Reißfestigkeit, der ausgehärteten Masse) und nicht zuletzt bevorzugt in Form der Alkoxysilane, deren Rolle als Haftvermittler diskutiert.

Den niedermolekularen Alkoxysilanen der DE 10 2006 054 155 d.h. Alkoxysilanen, die eine basische Gruppe wie NH₂-, NHR³-, oder N(R³)₂-Gruppe besitzen, wird sogar die reine Funktion als Härtungskatalysatoren oder zumindest Härtungscokatalysatoren zugeschrieben. Nachteilig an der beschriebenen Vorgehensweise ist die geringe Funktionalisierungsdichte des nur in α,ω-Position mit Silylgruppen terminierten Präpolymers. Angesichts des hochmolekularen Aufbaus des angestrebten Polyurethanpolymers nimmt sich die Silylmodifizierung bescheiden, um nicht zu sagen ungenügend aus, um den angestrebten Effekt einer guten und dauerhaften Substrathaftung wirksam zu adressieren. Daher bezieht sich die Lehre der DE 10 2006 054 155 auf die Option, freie Silane der PU-Matrix hinzuzusetzen, um die Eingangs diskutierten gewünschten Effekte (Haftvermittlung, Trocknung, Vernetzung u.ä.) hervorzurufen. Sichergestellt ist hiermit keinesfalls der zielgerichtete Einbau von Silylankergruppen an den Stellen des Polymers, die deren positiver Wirkung bedürfen. Insbesondere im Sinne der qualitätssichernden Reproduzierbarkeit lässt das dargestellte Verfahren Mängel erkennen.

Der Bedarf nach einem technisch einfachen, sicheren und insbesondere reproduzierbaren Verfahren ist somit gegeben.

Überraschenderweise wurde nun gefunden, dass man die hier dargelegten technischen Beschränkungen und Nachteile überwinden kann, indem man als Copolymerkomponente neue Alkoxysilylgruppen tragende Polyetheralkohole einsetzt, die durch Alkoxylierung epoxidfunktioneller Alkoxysilane an Doppelmetallcyanid (DMC)-Katalysatoren zugänglich sind und in der noch nicht offengelegten Schrift DE 102008000360.8 vollumfänglich beschrieben werden, die hiermit vollumfänglich als Teil und Gegenstand dieser Offenbarung eingeführt wird.

Diese neuen Polyetherstrukturen, die sowohl Alkoxysilanfunktionen innerhalb der Sequenz der Oxyalkyleneinheiten der Polyetherkette als auch neue Multialkoxysilanfunktionen in ihren Termini aufweisen können, erlauben es, die Ankergruppendichte in dem angestrebten Präpolymer nach Belieben, d.h., angepasst auf die jeweilige anwendungstechnische Fragestellung einzustellen.

Diese neuartigen, reaktiven Polyether stellen auf Grund ihrer hydrolyseempfindlichen und zur Vernetzung neigenden Alkoxysilylgruppen bereits selbst härtbare Polymere dar. Deren Vernetzung zu festen duroplastischen Endprodukten erfolgt auf einfache Weise in Gegenwart von Wasser und wahlweise unter Zusatz von Säure oder Base als Beschleuniger, wobei durch Erhöhung der Temperatur während des Härtungsvorgangs die Topfzeit gesteuert werden kann. Somit kann der Polymeraufbau dieser vernetzbaren Polyether je nach und Art des Starters sowie nach Art, Menge und Abfolge der einsetzbaren Epoxidmonomere auf mannigfaltige Weise variiert werden, um auf diesem Weg wichtige anwendungstechnische Produkteigenschaften abhängig vom jeweiligen Verwendungszweck maßzuschneidern. So lässt sich beispielsweise durch eine Variation des Anteils an Alkoxysilan-Einheiten in der Polymerkette die Vernetzungsdichte und damit das mechanische und physikochemische Eigenschaftsprofil der ausgehärteten Polymere in weiten Grenzen beeinflussen. Überraschenderweise sind hier selbst mit beachtlicher Alkoxysilyl-Funktionalisierungsdichte ausgestattete Polyether niedrigviskose, gut handhabbare Flüssigkeiten, so dass auch im Falle angestrebter hochvernetzter, gut haftender Klebeverbindungen keinerlei Einschränkungen im Hinblick auf die Dosierung dieser Komponente zu verzeichnen sind. Diese Beobachtung differenziert die erfindungsgemäße Lehre von der in der DE 10 2006 054 155 dargelegten Vorgehensweise, die auf das Einbringen freier Silanmonomerer als Formulierungsbestandteile in den Endrezepturen abstellt, um zu gewährleisten, dass die notwendige Vernetzungsdichte bei gleichzeitig niedriger Verarbeitungsviskosität erzielt wird. Die im Hinblick auf ihre strukturelle Vielfalt kaum einzugrenzenden Alkoxysilylgruppen aufweisenden Polyether eröffnen dem in der Polymerchemie vertrauten Fachmann durch den Einbau z.B. von Ester-, Carbonat- und aromatischen Strukturelementen eine Gestaltungsfreiheit, die nahezu beliebige anwendungstechnische Bedürfnisse adressiert.

Die nach erfindungsgemäßem Verfahren gewonnenen Polymere eignen sich beispielsweise als Grundstoffe für die Her¬Stellung von Klebstoffen, zur Oberflächen¬beschichtung, als reaktive Vernetzer, als Haftvermittler und Primer sowie Bindemittel für verschiedene Substrate wie Metalle, Glas und Glasfasern/Glasgewebe, Holz, Holzwerkstoffen, Naturfasern, sowie beispielsweise auch Kork und generell silikatischen Materialien. So erweist sich der gezielte Einbau der sich über hydrolytische Prozesse an Mauerwerk, Beton, Mörtel, usw. verankernden Alkoxysilylgruppierungen als äußert vorteilhaft bei Einsatz derartig ausgerüsteter Systeme im Bereich der Bauwirtschaft, wo es um die verbindende und isolierende Abdichtung von z.B. Zargen für Fenstern und Türen in Rohbauten geht.

Da die neuartigen Präpolymere bei ihrer Härtung nicht gasförmige Reaktionsprodukte freisetzen, besteht auch die Möglichkeit, sie zur Beschichtung von Oberflächen in Form z.B. eines Lackes oder eines Lackbestandteils zu nutzen. So beschreibt die WO 2008/074489 Beschichtungsmittel mit hoher Kratzbeständigkeit und Witterungsbeständigkeit auf Basis von Polyolen und Polyisocyanaten mit hydrolysierbaren Silangruppen.

Auch ist die Anwendung durch den möglichen Verzicht auf freie Isocyanate auf Anwendungen mit Lebensmittelkontakt ausweitbar. Die erfindungsgemäßen Polymere können als Bindemittel, das heißt zur Verbindung von gleichartigen oder verschiedenartigen Stoffen miteinander, bei der Herstellung von Holzwerkstoffen, wie beispielsweise Spanplatten oder MDF-Platten, der Verklebung der Holz- oder Korkpartikel (auch Holzspänen oder Holzfasern) dienen und stehen so auch für Fußböden, Parkett und Laminatanwendungen als Ersatz zu Aminoplasten oder Isocyanat-Klebezusammensetzungen zur Verfügung. Die Umverteilung der reaktiven Gruppen vom silangruppenmodifizierten Polyisocyanat auf das Polyol unter gleichzeitiger Zurverfügungstellung multipler hydrolysierbarer Alkoxysilylgruppen führt zu neuen Kleb- und Beschichtungsstoffen mit variabel einstellbarem Eigenschaftsprofil. Die erfindungsgemäßen Polymere können auch thermoplastische Eigenschaften besitzen und damit auch zur Herstellung von Formteilen dienen, bei denen ein temperaturabhängiges Fließverhalten notwendig ist. Die Formmassen können in Verfahren wie beispielsweise Spritzgießen, Extrudieren oder Warmpressen verwendet werden. Die erfindungsgemäßen Polymere können bevorzugt ohne Katalysatoren eingesetzt werden, so dass eine weitere Vernetzung und Härtung während des Formgebungsprozesses unterbleibt. Nach der Vernetzung gehen die Silylgruppen tragenden Polymere in duroplastische Produkte über.

Ein Gegenstand der Erfindung sind daher härtbare Präpolymere mit mehr als 1 Alkoxysilylfunktion pro gegenüber Epoxidgruppen reaktivem Kettenende als Bestandteil von Zusammensetzungen verwendbar als Kleb-, Binde- und/oder Beschichtungsmittel.

Wie dem Fachmann bekannt, geschieht die Vernetzung oder Härtung von Alkoxysilylgruppen in einem zweistufigen chemischen Prozess, bei dem in einem ersten Schritt in Gegenwart von Wasser, wobei auch Luftfeuchtigkeit ausreichen kann, die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOHfunktionellen Intermediate mit reaktive Gruppen aufweisenden Substraten, z.B. besonders gut mit OH-Funktionen tragenden silikatischen Oberflächen, und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen.

Auf dieser Weise können Polymere Werkstoffe gegebenenfalls mit schaumartiger Struktur erhalten werden, indem die bekannten Verfahren der freien bzw. katalytisch herbeigeführten Aushärtung von Präpolymeren herbeigeführt werden. Durch die Variabilität und Vielzahl der Alkoxysilygruppenmodifizierung kann anwendungsgerecht die zu wählende Vorzugsform bestimmt werden. Die härtbaren Präpolymere weisen mehr als eine Alkoxysilylfunktion, bevorzugt mehr als eine Trialkoxysilylfunktion pro gegenüber Epoxidgruppen reaktivem Kettenende auf.

Die erfindungsgemäß verwendeten alkoxysilylmodifizierten Polyetherole der Formel (1) können z. B. durch die Reaktion zwischen silylgruppenmodifizierten Epoxiden und einem Startalkohol unterschiedlichster Provenienz gewonnen werden.

Die Herstellung und die einsetzbaren Epoxid-Strukturtypen sind ausführlich in der nicht vorveröffentlichen DE 10 2008 000360.3 beschrieben. Der Inhalt der Beschreibung und der Ansprüche der DE 10 2008 000360.3 ist hiermit vollumfänglich als Bestandteil diese Offenbarung anzusehen.

Die so hergestellten Verbindungen gewähren die synthetische Freiheit, zwischen Alkoxysilylgruppen aufweisenden Polyoxyalkylenverbindungen zu wählen, die die hydrolysierend vernetzbaren Alkoxysilylfunktionen sowohl terminal, als auch isoliert, blockartig kumuliert als aber auch statistisch eingestreut in die Polyoxyalkylenkette enthalten.

Die so hergestellten Präpolymere, insbesondere die alkoxysilylgruppen modifizierten Polyether der Formel (1) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Werden als Präpolymere solche eingesetzt die am Siliziumatom mehr als 1 der hochfunktionalierten Polyalkylenetherfragmenten gebunden enthalten, so liegen hochfunktionalisierte Netzwerke vor, bei denen Polyetherketten, die jeweils von einem Startalkohol Der Formel (2) R¹-H abgeleitet sind und die in ihrer Abfolge die frei permutierbaren Fragmente enthalten, die durch die Reaktion unter Ringöffnung der Reaktionskomponenten in die entstehende Polymerkette eingefügt wurden, über -CH₂-O-(CH₂)_{c}-Si-(CH₂)_{c}-O-CH₂-Brücken miteinander verknüpft sind. Es handelt sich um hochkomplexe, hochfunktionalisierte Strukturen. Auch hier lassen sich die Funktionalitäten gezielt auf ein gewünschtes Anwendungsgebiet einstellen. Der Vernetzungsgrad und die Komplexität der erhaltenen Polymerstrukturen steigen mit zunehmender Epoxyfunktionalität der Silylmonomere. Ganz besonders bevorzugt sind 3-Glycidyloxyalkyltrialkoxysilane als Monomere.

Dabei können die Fragmente, die durch die Reaktion unter Ringöffnung in die entstehende Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über -CH₂-O-(CH₂)_{c}-Si-(CH₂)_{c}-O-CH₂-Brücken miteinander verbundenen Polyetherstruktureinheiten, vorkommen. Die Mannigfaltigkeit der Strukturvariationen der Verfahrensprodukte gestattet damit keine eindeutige formelmäßige Beschreibung.

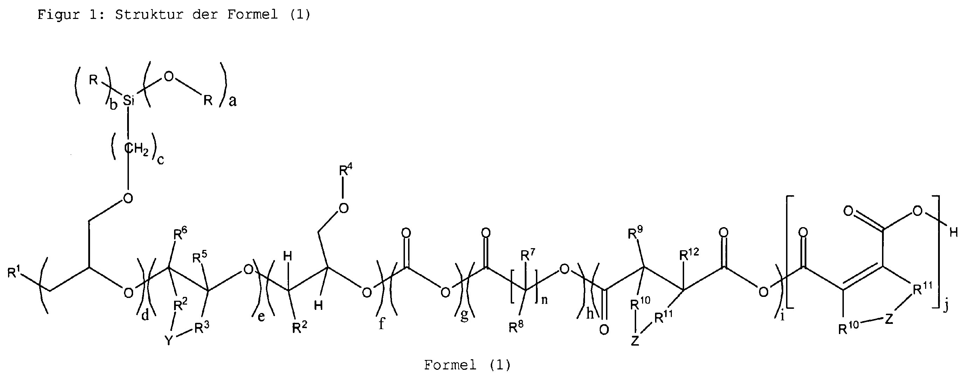

Als Präpolymere werden Polyetherstrukturen der Formel (1) - siehe auch Figur 1 - eingesetzt. Diese bestehen aus Alkoxysilylgruppen substituierten, linearen Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können. 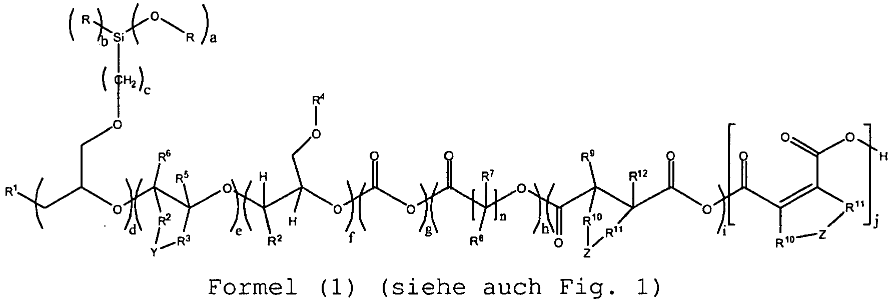 wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 22, bevorzugt von 0 bis 18, besonders bevorzugt von 0 bis 6 und insbesondere gleich 1 bis 3 ist,
- d: eine ganze Zahl von größer 1 bis 1.000, bevorzugt größer 1 bis 100, besonders bevorzugt größer 1 bis 20 und insbesondere größer 1 bis 10 ist,
- e: eine ganze Zahl von 0 bis 10.000, bevorzugt 0 bis 1000, besonders bevorzugt 0 bis 300 und insbesondere 0 bis 100 ist,
- f: eine ganze Zahl von 0 bis 1.000, bevorzugt 0 bis 100, besonders bevorzugt 0 bis 50 und insbesondere 0 bis 30 ist,
- g: eine ganze Zahl von 0 bis 1.000, bevorzugt 0 bis 200, besonders bevorzugt 0 bis 100 und insbesondere 0 bis 70 ist,
- h, i und j: ganze Zahlen von 0 bis 500, bevorzugt 0 bis 300, besonders bevorzugt 0 bis 200 und insbesondere 0 bis 100 ist, und mit der Maßgabe, dass die Fragmente mit den Indices d bis j untereinander frei permutierbar, d.h. in der Sequenz innerhalb der Polyetherkette gegeneinander austauschbar sind
- n: eine ganze Zahl zwischen 2 und 8 ist und
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen, und insbesondere Ethyl- oder Methylgruppen, mit
- R¹: gleich einem gesättigten oder ungesättigten, unverzweigten oder verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ eine einfach oder mehrfach annelierte aromatische Gruppe, an die eine phenolische OH-Gruppe direkt gebunden ist.
- R²: oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoff rest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste R² oder R³ Wasserstoff. R²-R³ kann eine -CH₂CH₂CH₂CH₂-Gruppe, Y damit eine -(CH₂CH₂-)-Gruppe sein. Die Kohlenwasserstoffreste R² und R³ können ihrerseits weiter substituiert sein und funktionelle Gruppen wie Halogene, Hydroxylgruppen oder Glycidyloxypropylgruppen tragen.
- R⁴: entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann.
- R⁷ und R⁸: sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden.
- R⁹, R¹⁰, R¹¹ und R¹²: sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (1) wiedergegeben sind, solche mit der doppelten, zum Teil dreifachen oder gar vielfachen Molmasse enthalten. Formel (1) gibt mithin die komplexe chemische Realität nur vereinfacht wieder.

Somit enthalten die Zusammensetzungen auch Verbindungen, in denen die Summe der Indices (a) plus (b) in Formel (1) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (1) ausgebildet werden.

Das Vorhandensein von mehr als einem Signal in typischen ²⁹Si-NMR-Spektren dieser Verbindungen untermauert das Auftreten von Silylgruppen mit unterschiedlichem Substitutionsmuster. Die angegebenen Werte und Vorzugsbereiche für die Indizes a bis j sind somit auch nur als Mittelwerte über die verschiedenen, einzeln nicht fassbaren Spezies zu verstehen.

Als Starter oder Startverbindungen für die Alkoxylierungsreaktion die zu den hochfunktionalisierten, netzwerkartigen Alkoxysilylverbindungen und/oder den Trialkoxysilylverbindungen der Formel (1) führen, können alle Verbindungen der Formel (2)

R¹-H (2)

(das H gehört zur OH-Gruppe eines Alkohols oder einer phenolischen Verbindung) allein oder in Mischungen miteinander eingesetzt werden, die gemäß Formel (2) mindestens eine reaktive Hydroxylgruppe aufweisen. R¹ entspricht einem gesättigten oder ungesättigten, gegebenenfalls verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine einfach oder mehrfach annelierte aromatische Gruppe, an die eine phenolische OH-Gruppe direkt gebunden ist. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Unter Startverbindungen werden Substanzen verstanden, die den Anfang (Start) des herzustellenden Polyethermoleküls (1) bilden, das durch die Anlagerung von epoxidfunktionellen Monomeren erhalten wird. Die in dem Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt.

Als OH-funktionelle Startverbindungen R¹-H (2) werden vorzugsweise Verbindungen mit Molmassen von 18 bis 10.000 g/mol, insbesondere 50 bis 2000 g/mol und mit 1 bis 8, bevorzugt mit 1 bis 4 Hydroxylgruppen eingesetzt.

Beispielhaft für Verbindungen der Formel (2) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Je nach verwendetem epoxidfunktionellem Alkoxysilan und evtl. eingesetzten weiteren Monomeren, sowie evtl. auch Kohlendioxid können Alkoxysilylgruppen-modifizierte Polyetheralkohole (1) hergestellt werden, sowie deren beliebig aufgebaute Gemische. Bevorzugt ist die Alkoxysilaneinheit in der Verbindung der Formel (1) eine Trialkoxysilyleinheit.

Die Alkoxysilylpolymere der Formel (1) können allein oder in beliebiger Kombination, abgemischt mit monomeren Alkoxysilanen, alkoxysilylterminierten Präpolymeren, Härtungskatalysatoeren sowie weiteren Zusatz- und Hilfsstoffen, die sich in der Summe auf 100 Teile ergänzen, verwendet werden.

Die erfindungsgemäßen Präpolymere, insbesondere die Alkoxysilangruppen enthaltenden Verbindungen der Formel (1) können dank ihrer niedrigen Viskosität auch als Reaktivverdünner in Kombination mit anderen, dann üblicherweise höherviskosen Silylverbindungen eingesetzt werden. Die hoch trialkoxysilylfunktionellen Präpolymeren der Formel (1) steigern die Netzwerkdichte und tragen damit zur Verbesserung der mechanischen Eigenschaften des Polymers bei. Zudem können sie auch die Viskosität von entsprechenden Präpolymerabmischungen mit bekannten Alkoxysilanen beeinflussen.

Die erfindungsgemäßen Präpolymere, insbesondere die Verbindungen der Formel (1), können z. B. in Zusammensetzungen enthalten sein, die zur Beschichtung von Oberflächen eingesetzt werden. Die Beschichtung kann z. B. eine Klebstoffbeschichtung, insbesondere eine geschäumte Klebstoffbeschichtung sein.

Gegenstand der vorliegenden Erfindung sind deshalb auch Zusammensetzungen, die die erfindungsgemäßen Präpolymere, insbesondere solche der Formel (1), enthalten. Sollen diese erfindungsgemäßen Zusammensetzungen schäumbar sein, enthalten diese ein oder mehrere, gegebenenfalls chemisch gebildete Treibmittel.

Die zu beschichtenden Oberflächen können durch bekannte Mittel wie sprühen, streichen, tauchen, etc. beschichtet werden. Die zu verklebenden Oberflächen werden bei dem Verfahren vorzugsweise aufeinandergepresst. Das Aufbringen der gegebenenfalls schäumbaren Mischung (Zusammensetzungen) zur Herstellung der Verklebung erfolgt vorzugsweise aus einer Druckdose, wobei die Schaumbildung durch das in der Mischung enthaltene, gegebenenfalls auch durch chemische Reaktion freigesetzte, Treibmittel erfolgt.

Beim Zusammendrücken der zu verklebenden Oberflächen wird die Schaumstruktur des Schaumes vorzugsweise zumindest weitgehend zerstört. Dementsprechend besteht der Schaum, wenn er zwischen zu verklebenden Flächen zerdrückt worden ist, vorzugsweise zu weniger als 60 % seines Volumens, besonders bevorzugt zu weniger als 40 % seines Volumens und insbesondere bevorzugt zu weniger als 20 % seines Volumens aus Gasblasen.

Bei einer bevorzugten Ausführungsform wird wenigstens eine der zu verklebenden Oberflächen vor der erfindungsgemäßen Anwendung des Schaums angefeuchtet. Ganz besonders bevorzugt wird eine der zu verklebenden Oberflächen angefeuchtet, während der Schaum auf der jeweils anderen Oberfläche appliziert wird. Anschließend wird der Schaum zwischen beiden Oberflächen zerdrückt. Der Erfindung liegt die überraschende Entdeckung zugrunde, dass der Schaum eine erstaunlich hohe Anfangsfestigkeit aufweist, wenn er auf einer der zu verklebenden Oberflächen aufgetragen wird und anschließend durch festes Aufeinanderpressen dieser Oberflächen zerdrückt wird. Dies unterscheidet ihn ganz grundlegend von den im Stand der Technik beschriebenen sprühbaren Montageschäumen, die als Schäume mit sehr niedriger Dichte nur eine geringe Anfangsmechanik aufweisen. Die anfängliche Klebkraft des Schaums hingegen ist - eine hinreichende Haftung auf den jeweiligen Oberflächen vorausgesetzt - vorzugsweise bereits nach spätestens 10 min, bevorzugt nach 5 min und besonders bevorzugt bereits nach 2 bzw. 1 min, bereits so groß, dass die Klebenaht bereits mit einer dauerhaften Zugspannung (Zugkraft senkrecht zur Klebefläche) und/oder einer Scherspannung (Zugkraft parallel zur Klebefläche) von 500 N/m², bevorzugt von mindestens 1000 N/m² und besonders von mindestens 1500 N/m² belastet werden kann.

Die hohe Anfangsfestigkeit des Schaumes ist dabei auf ein auch den Fachmann überraschendes Phänomen zurückzuführen. So baut sich die Klebkraft des Schaumes - anders als bei konventionellen silanvernetzenden Klebstoffen - nicht nur durch die chemische Silanvernetzung auf. Stattdessen zeigt sich hier neben diesem chemischen Härtungsprozess zusätzlich noch ein bemerkenswerter physikalischer Effekt, wie er ansonsten nur von Kontaktklebstoffen bekannt ist, bei denen der Festigkeitsaufbau nur durch die Verdampfung zugesetzter Lösungsmittel erfolgt. Beim Schaum wird die Funktion dieser Lösungsmittel durch das Treibmittel bzw. die Treibmittelmischung übernommen. Anders als bei den nur sehr langsam härtenden Kontaktklebern verdampfen die Treibmittel jedoch nicht gemächlich sondern zu großen Teilen schlagartig bereits beim Verschäumen der schäumbaren Mischung. Dabei schäumen sie diese zum Schaum auf, wobei der Schaum trotz einer nach dem Verdampfen des Treibmittels sehr hohen Viskosität überraschenderweise äußerst beweglich bleibt, so dass sich der Schaum durch das Aufeinanderpressen der zu verklebenden Oberflächen problemlos zerdrücken lässt. Beim Zerdrücken des Schaumes entsteht zwischen den zu verklebenden Oberflächen eine gleichmäßige und dünne Klebstoffschicht, und die Oberflächen werden gut benetzt, so dass eine optimale Klebewirkung erreicht werden kann. Diese wird anschließend durch die ablaufenden chemischen Härtungsreaktionen weiter verstärkt.

Somit ist ein weiterer Gegenstand der Erfindung ein Verfahren zum Verkleben von Oberflächen, bei dem eine schäumbare Zusammensetzung bereitgestellt wird, die zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Einen weiteren völlig überraschenden Effekt stellt zudem die Tatsache dar, dass unerwünschte Reste an Schaum, wie sie z.B. entstehen, wenn überschüssige Mengen an Schaum beim Zusammenpressen der zu verklebenden Flächen aus der Klebefuge herausgepresst werden, vergleichsweise leicht entfernbar sind. Offensichtlich sind Oberflächenbenetzung und Haftung des Schaumes an Stellen, an denen die Schaumstruktur nicht zerdrückt damit nicht zerstört wird, deutlich verringert.

Offensichtlich behält der gebildete Schaum, unabhängig von seinem Treibmittel und der gegebenenfalls notwendigen Wärmezufuhr, seine auf der feinen Schaumstruktur beruhenden Beweglichkeit und damit verbundene Fähigkeit zur Oberflächenbenetzung unter Druck auch dann, wenn der ausgebrachte Schaum oberflächlich eine klebfreie Schicht ausgebildet hat, die jedoch beim Zerdrücken des Schaumes zwischen den zu verklebenden Werkstücken aufplatzt, wodurch noch unvernetzte Präpolymere freigesetzt und in Kontakt mit den zu verklebenden Oberflächen gebracht werden.

Begünstigt wird die hohe anfängliche Klebkraft des Schaumes durch eine möglichst hohe Schaumdichte.

Daher ist ein weiterer Gegenstand der Erfindung eine schäumbare Zusammensetzung, welche
(A) die vorstehenden Präpolymere, vorzugsweise Präpolymere mit Gruppen der allgemeinen Formel (1) und
(B) unter 15 Gew.-% Treibmittel, bezogen auf die gesamte Mischung enthält.

Als Treibmittel sind bereits bei relativ geringem Druck kondensierbare Gase geeignet, die auch zur Herstellung sprühbarer Montageschäume verwendet werden. Gängige Treibmittel sind beispielsweise Kohlenwasserstoffe mit jeweils 1 bis 5, insbesondere 3 bis 5 Kohlenstoffatomen, insbesondere Propan-Butan-Mischungen oder Isobutan, Fluorkohlenwasserstoffe mit 1-5 Kohlenstoffatomen, z.B. 1,1,1,2-Tetrafluorethan oder 1, 1-Difluorethan, oder Dimethylether sowie entsprechende Mischungen. Der Treibmittelgehalt liegt vorzugsweise bei < 10 Gew.-%, besonders bevorzugt bei < 7 bzw. < 5 Gew.-% bezogen auf die gesamte Mischung.

Bevorzugt liegt der Gehalt der Treibmittel bezogen auf die gesamte Mischung bei maximal 10 Gew.-% besonders bevorzugt bei maximal 7 Gew.-%.

Die Schaumbildung kann auch ohne Zugabe eines Treibmittels auf rein chemischer Basis erfolgen, hier allerdings bevorzugt im Fall einer Warm- oder Heißhärtung. Hierbei wird bei Erwärmung der Klebemischung ein niedrigflüchtiges Treibmittel gebildet, das beispielsweise Alkohole wie Methanol, Ethanol umfasst, die aus der Hydrolyse der Alkoxysilylgruppe entstanden sind. Auch kann Wasser oder ein inertes Lösungsmittel bei erhöhter Temperatur als Treibmittel dienen.

Wird eine Beschichtung eines Substrats erwünscht, so kann in einfacher Weise auf das Treibmittel verzichtet werden, und gegebenenfalls durch Zugabe von Lösungsmitteln oder weiteren Additiven und Hilfsstoffen, die für Beschichtungen erforderlichen Materialeigenschaften gezielt eingestellt werden. Gegenstand der vorliegenden Erfindung ist deshalb auch ein Verfahren zum Beschichten bzw. zum Modifizieren von Oberflächen, wobei eine Zusammensetzung, die Präpolymere, insbesondere solche der Formel (1) enthält, auf die zu behandelnde Oberfläche appliziert und ausgehärtet wird.

Als Katalysatoren für die Vernetzung oder Polymerisation der erfindungsgemäßen Präpolymeren, insbesondere der Alkoxysilylgruppentragenden Polyetherole der Formel (1) können die bekannten Polyurethanisierungs-, Allophanatisierungs- oder Biuretisierungskatalysatoren verwendet werden, die dem Fachmann an sich bekannt sind. Hierzu zählen Verbindungen, wie beispielsweise die Zinksalze Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibu-tylzinndiacetylacetonat, Dibutylzinndiacetat oder Di-butylzinndioctoat etc., verwende t werden. Des Weiteren können auch Bismutkatalysatoren, z.B. der Bor-chi-Katalysator, Titanate, z.B. Titan(IV)isopropylat,Eisen(III)-Verbindungen, z.B. Eisen(III)-acetylaceto-nat, oder auch Amine, z.B. Triethylamin, Tributyla-min, 1,4-Diazabicyclo[2,2,2]octan, 1,8-Diazabicyc-lo[5.4.0]undec-7-e n, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Besonders zinnorganische Katalysatoren sind aber in jüngerer Zeit aufgrund ihrer toxischen Eigenschaften in Verruf geraten. Darüber hinaus schließt der Einsatz derartiger Katalysatoren in der Regel das Vorliegen von Esterbindungen in diesen Systemen aus, da die Katalysatoren eine Esterspaltung beschleunigen und damit gegebenenfalls Eigenschaftsveränderungen des Systems hervorrufen. Damit ist der Hersteller derartiger Systeme, beispielsweise der Hersteller von Kleb- oder Dichtstoffsystemen für den Heimwerkerbereich, in der Formulierungsfreiheit eingeschränkt. Die DE 102004018548 beschreibt daher den Einsatz härtbarer Zusammensetzungen, die mindestens ein silyl-terminiertes Polymer und mindestens eine photolatente Base enthalten, wobei das silyl-terminierte Polymer aus einem linearen oder verzweigten, silangruppenfreien Basispolymer-Rest besteht, welcher endständige Silangruppen trägt. Bevorzugt sind insbesondere silylterminierte organische Polymere und/oder silyl-terminierte Silikonpolymere.

Die entsprechenden organischen Polymere oder Silikonpolymere der DE 10 2004 018 548 enthalten dabei innerhalb ihrer Hauptkette oder Hauptketten keine Silangruppen, sondern nur an den jeweiligen Kettenenden der Polymerketten. So sind in einem linearen Polymer nur die beiden Enden des Polymers silyl-terminiert, ein solches Polymer wird im Folgenden als divalent oder zweiwertig bezeichnet. Bei der Verwendung eines, beispielsweise Glycerol gestarteten Polymers können sich ausgehend von den drei Hydroxygruppen des Glycerols drei unabhängige silanfreie Polymerstränge bilden, wobei wiederum erst am Strangende eine Silangruppe als Terminus angebracht sein kann. Ein derart verzweigtes Polymer mit drei Enden wird im Folgenden als trivalent oder dreiwertig bezeichnet. Analog werden Polymere mit vier Enden als vierwertig bezeichnet.

Das Fehlen weiterer Silangruppen in den Strukturen der DE 10 2004 018 548 innerhalb der Basispolymerkette, z.B. als Seitengruppen begrenzt die Vernetzungsdichte sowie die mechanischen Eigenschaften nach der Aushärtung. Bei einer Vernetzung über Seitengruppen kann die Haftung aufgrund zusätzlicher Ankergruppen auf dem jeweiligen Substrat erhöht werden, oder aber durch die geeignete Wahl der Silylfunktionalisierung anwendungsabhängig angepasst werden. Durch geeignete Strukturselektion wird das Zeitfenster der Härtung damit in das Ermessen des Anwenders gestellt; gleichzeitig können so auch Zusammensetzungen mit hervorragender Lagerstabilität zielgerichtet hergestellt werden.

Die erfindungsgemäßen (härtbaren) Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Die Wahl der photolatenten Base hängt einerseits von den zu vernetzenden silanterminierten Polymeren ab, andererseits von den weiteren fakultativen Bestandteilen der Zusammensetzung. Bedarf die Vernetzungsreaktion einer starken Base, so muss eine photolatente bzw. photolabile Base gewählt werden, die bei Bestrahlung eine starke Base freisetzt. Enthält die Zusammensetzung weitere UVabsorbierende Bestandteile, so wird vorzugsweise eine photolatente Base gewählt, deren Aktivierungswellenlänge, d.h. Wellenlänge der Abspaltung der freien Base, nicht mit den anderen U V-absorbierenden Bestandteilen interferiert.

Da der Zeitpunkt der Bestrahlung frei gewählt werden kann und somit der Kontakt der härtbaren Polymere (Präpolymere) mit den freien Basen durch den Anwender bestimmbar ist, kann der Härtungsbeginn ins Belieben und Ermessen des Anwenders gestellt werden.

Die Synthese der oben genannten photolatenten Basen ist unter anderem in der WO 03/033500 A1 beschrieben Gegebenenfalls findet ein Photosensibilisator Mitverwendung, da sich damit die Quantenausbeute bei der Photoaktivierung verbessern lässt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,5 Gew.-% bezogen auf den Festgehalt des Verfahrensprodukts eingesetzt.

Der Katalysator bzw. die photolatente Base kann in einer Portion oder aber auch portionsweise oder auch kontinuierlich zugegeben werden. Bevorzugt ist Zugabe der gesamten Menge in einer Portion.

Als weitere Komponenten können die Zusammensetzungen vorzugsweise weitere zumeist monomere Silane, Füllstoffe, Lösungsmittel, Schaumstabilisatoren sowie Katalysatoren zur Beschleunigung der Aushärtung des Schaumes enthalten. Als weitere Silane können dabei prinzipiell sämtliche Silane, bevorzugt mit hydrolysierbaren Alkoxygruppen, eingesetzt werden und insbesondere mit solchen Verbindungen, wie sie in der DE 10200605415 oder der WO 2005/003201 beschrieben sind.

Neben den Silanen enthalten die Zusammensetzungen als weitere Komponenten und Hilfsstoffe oftmals Füllstoffe. Die Füllstoffe führen dabei zu einer erheblichen Eigenschaftsverbesserung der resultierenden Abmischungen. Vor allem die Reißfestigkeit wie auch die Bruchdehnung können durch den Einsatz von geeigneten Füllstoffen erheblich gesteigert werden. Gängige Füllstoffe sind beispielsweise Calciumcarbonat, pyrogene Kieselsäure und Ruß. Die unterschiedlichen Füllstoffe werden oftmals auch in Kombination eingesetzt. Als Füllstoffe eigenen sich dabei sämtliche Materialien, wie sie im Stand der Technik vielfach beschrieben sind. Die Füllstoffe werden bevorzugt in einer Konzentration von 0 bis 90 Gew.-% bezogen auf die fertige Mischung eingesetzt, wobei Konzentrationen von 5 bis 70 Gew.-% besonders bevorzugt sind.

Die erfindungsgemäßen Zusammensetzungen können zudem auch noch weitere organische Substanzen, bevorzugt Flüssigkeiten und Lösungsmittel enthalten Die Lösungsmittel dienen dabei beispielsweise der Erniedrigung der Viskosität der unvernetzten Mischungen. Als Lösungsmittel kommen prinzipiell sämtliche Lösungsmittel sowie Lösemittelmischungen in Betracht. Als Lösungsmittel werden bevorzugt Verbindungen eingesetzt, die über ein Dipolmoment verfügen. Besonders bevorzugte Lösungsmittel verfügen über ein Heteroatom mit freien Elektronenpaaren, die Wasserstoffbrückenbindungen eingehen können. Bevorzugte Beispiele für solche Lösungsmittel sind Ether wie z.B. t-Butyl-methylether, Ester, wie z.B. Ethylacetat oder Butylacetat sowie Alkohole, wie z.B. Methanol, Ethanol sowie die verschiedenen Regioisomere des Propanols und Butanols oder auch anwendungsspezifisch ausgewählte Glykoltypen.

Um bei Raumtemperatur eine schnelle Aushärtung, insbesondere der Schäume zu erreichen, kann gegebenenfalls ein Härtungskatalysator z.B. aus der Gruppe der zuvor genannten Polyurethanisierungs-, Allophanatisierungs- oder Biuretisierungskatalysatoren, der Säuren, Basen oder photolabilen Verbindungen zugesetzt werden. Als Schaumstabilisatoren können dieselben Verbindungen verwendet werden, die auch zur Herstellung von herkömmlichen Montageschäumen verwendet werden. Sie sind kommerziell in großer Auswahl erhältlich in der Literatur vielfach beschrieben.

Des Weiteren können die Zusammensetzungen auch an sich bekannte Hilfsstoffe, wie von den Komponenten abweichende Wasserfänger, Haftvermittler und/oder Reaktivverdünner sowie Weichmacher (z.B. Phthalate, Benzoate, Phosphatweichmacher), Thixotropiermittel, Fungizide, Flammschutzmittel, Pigmente etc. enthalten. Auch Lichtschutzmittel, Antioxidantien, Radikalfänger sowie weitere Stabilisatoren können den Zusammensetzungen zugesetzt werden. Zur Erzeugung der jeweils gewünschten Eigenschaftsprofile, sowohl der unvernetzten Mischungen als auch der ausgehärteten Massen, sind derartige Zusätze in der Regel unverzichtbar.

Für die erfindungsgemäßen Zusammensetzungen existieren zahllose verschiedene Anwendungen im Bereich der Kleb-, Dicht-, Binde- und/oder Fugendichtstoffe. Dabei sind sie für zahllose unterschiedliche Untergründe, wie z.B. mineralische Untergründe, Metalle, Kunststoffe, Glas, Keramik, Holz, Holzwerkstoffe, Naturfaser oder auch Kork etc., geeignet. Prinzipiell eignen sich die Zusammensetzungen bzw. die daraus hergestellten Schäume zum Verkleben von jedweden Gegenständen. Vor allem aber sind sie hoch geeignet, wenn die zu verklebenden Flächen uneben sind oder aber kleinteilige Fasern oder Partikel, sowie auch beispielsweise Kork, miteinander zu einem Verbundwerkstoff verbunden werden sollen. Dies ist z.B. beim Verkleben von Bruchstellen, die durch Absplitterungen oder Materialverbiegungen nicht mehr genau übereinander passen, der Fall, oder auch beim Verkleben von Fußleisten, Deckenleisten oder sonstigen Verzierungen auf einer unebenen Wandoberfläche. Hier besitzen die Schäume den Vorteil, auch Hohlräume gut ausfüllen zu können.

Die erfindungsgemäßen Zusammensetzungen werden vorzugsweise als schäumbare Klebstoffe, besonders bevorzugt als 1-komponentige bei Kontakt mit Luftfeuchtigkeit und/oder Wasser härtende schäumbare Klebstoffe eingesetzt.

Ein weiterer Gegenstand der Erfindung sind somit auch Verbundwerkstoffe wie beispielsweise Holzverbundstoffe wie MDF-Platten (mitteldichte Faserplatten), Spanplatten, Korkartikel, laminierte Artikel, die unter Verwendung der gegebenenfalls schäumbaren Präpolymere und deren Zusammensetzungen hergestellt werden.

Ein weiterer Gegenstand der Erfindung sind Klebstoffe, Dichtstoffe, Bindestoffe und/oder Fugendichtstoffe enthaltend die erfindungsgemäßen Präpolymere und Zusammensetzungen. Dieser Klebstoffe, Dichtstoffe, Bindestoffe und/oder Fugendichtstoffe nach Anspruch vermögen unterschiedliche Untergründe miteinander zu verkleben und/oder abzudichten und/oder zu verbinden.

Weiterhin können die Klebstoffe auch schäumbar sein.

Die erfindungsgemäßen Zusammensetzungen (bzw. Kleber) und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Weitere Ausgestaltungen der Erfindung ergeben sich aus den Ansprüchen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Soweit nicht anders angegeben sind in den nachstehenden Beispielen alle Mengen- und Prozentangaben auf das Gewicht bezogen, alle Drücke 0,10 MPa (abs.) und alle Temperaturen 20°C.

Als Maß für die Reaktivitäten der Präpolymere ist verschiedentlich die Klebfreizeit angegeben. Darunter ist diejenige Zeitspanne zu verstehen, die nach dem Ausbringen des Präpolymers an die Luft vergeht, bis die Polymeroberfläche soweit gehärtet ist, dass nach einer Berührung dieser Oberfläche mit einem Bleistift weder Polymermasse daran haften bleibt, noch eine Fadenbildung auftritt.

Experimenteller Teil:
In den nachfolgenden Beispielen wurden die folgenden Trialkoxysilylgruppen enthaltenden Polyether eingesetzt, die gemäß dem in der noch nicht offengelegten Schrift DE 10 2008 000360.8 nach dem Verfahrensprinzip der DMC-katalysierten Alkoxylierung von 3-Glycidyloxypropyltriethoxysilan bzw. 3-Glycidyloxypropyltrimethoxysilan hergestellt worden sind:
   Trialkoxysilylpolyether 1:
      Niedermolekularer, farbloser und niedrig viskoser Polyether der mittleren Molmasse von ca. 1300 g/mol und vierfacher Trialkoxysilanfunktionalität.
      Chemischer Aufbau: Tripropylenglykol + 4 mol 3-Glycidyloxypropyltriethoxysilan (Dynasylan® GLYEO) der Evonik Degussa GmbH
   Trialkoxysilylpolyether 2:
      Niedermolekularer, farbloser und niedrig viskoser Polyether der mittleren Molmasse von ca. 1200 g/mol und vierfacher Trialkoxysilanfunktionalität.
      Chemischer Aufbau: Tripropylenglykol + 4 mol 3-Glycidyloxypropyltrimethoxysilan (Dynasylan® GLYMO) der Evonik Degussa GmbH
   Trialkoxysilylpolyether 3:
      Höhermolekularer, fast farbloser und niedrig viskoser Polyether der mittleren Molmasse von ca. 9000 g/mol mit blockartigem Aufbau und 4-facher Trialkoxysilanfunktionalität.
      Chemischer Aufbau: Dipropylenglykol + 135 mol Propylenoxid + 4 mol 3-Glycidyloxypropyltriethoxysilan (Dynasylan® GLYEO)
   Trialkoxysilylpolyether 4:
      Höhermolekularer, fast farbloser und niedrig viskoser Polyether der mittleren Molmasse von ca. 6400 g/mol mit blockartigem Aufbau und 8-facher Trialkoxysilanfunktionalität.
      Chemischer Aufbau: Tripropylenglykol + 4 mol 3-Glycidyloxypropyltriethoxysilan (Dynasylan® GLYEO) + 70 mol Propylenoxid + 4 mol 3-Glycidyloxypropyltriethoxysilan (Dynasylan® GLYEO)

### 1. Herstellung von Klebschäumen:

### Beispiel 1.1:

Zur Herstellung einer homogenen härtbaren Mischung werden 200 g Trialkoxysilylpolyether 1, 20 g einer 10 Gew.-%igen Lösung von Methansulfonsäure in Polypropylenglykol der mittleren Molmasse 1100 g/mol und 40 g eines Polypropylenglykols der mittleren Molmasse 25000 g/mol bei 30 °C bis zum Erhalt einer klaren Lösung verrührt. Eine solche Mischung ist unter Feuchtigkeitsausschluss bei Raumtemperatur über mehrere Monate lagerstabil.

50 g dieser Mischung werden zusammen mit 1 g Schaumstabilisator Tegostab® B 8526 (Evonik Goldschmidt GmbH) in einen gläsernen Druckbehälter mit einem Volumen von 100 ml eingebracht und anschließend mit 5 g Butan als Treibmittel beaufschlagt. Nach gründlichem Schütteln zur Durchmischung wird so eine homogene und fast farblose durchsichtige Mischung erhalten. Über ein auf das Ventil aufgesetztes Adapterröhrchen, wie es für Montageschäume gebräuchlich ist, wird die unter Druck stehende feuchtigkeitshärtende Mischung bei Raumtemperatur als Schaum auf zwei Probekörper aus Holz mit einer 3 cm x 9 cm großen Klebefläche aufgetragen. Einer der Holzklötze wird im Anschluss auf eine verputzte und mit herkömmlicher Wandfarbe gestrichene Oberfläche, der Andere auf eine Holzoberfläche geklebt. Die Klebeflächen werden für einige Sekunden fest aufeinandergepresst und der Schaum dabei zerdrückt. Nach 30 min werden die Klebeflächen mit einer Zugspannung von 5 N dauerhaft belastet. Die Härtung ist nach dieser Zeit soweit fortgeschritten und die Haftung auf dem jeweiligen Untergrund so gut, dass sich die Klebeverbindungen nicht vom Substrat ablösen und der gehärtete Schaum der mechanischen Belastung standhält.

### Beispiel 1.2:

30 g der in Beispiel 1.1 beschriebenen härtbaren Präpolymermischung und 1 g Schaumstabilisator Tegostab® B 8870 (Evonik Goldschmidt GmbH) werden in einen gläsernen Druckbehälter mit einem Volumen von 100 ml eingewogen und anschließend mit 7 g Butan als Treibmittel versetzt. Die nach Schütteln homogene niedrigviskose Mischung wird nachfolgend durch Öffnen des am Druckbehälter befindlichen Ventils über ein Adapterröhrchen als Schaum ausgetragen. Nach 5 Minuten bei Raumtemperatur ist der Schaum klebfrei und nach 12 Stunden ausgehärtet.

### Beispiel 1.3:

Zur Herstellung einer homogenen härtbaren Mischung werden 225 g Trialkoxysilylpolyether 2 , 6 g Dibutylzinndilaurat und 75 g eines Polypropylenglykols der mittleren Molmasse 25000 g/mol bei 30 °C bis zum Erhalt einer klaren Lösung verrührt. Eine solche Mischung ist unter Feuchtigkeitsausschluss bei Raumtemperatur über mehrere Monate lagerstabil.

In einen Druckbehälter mit einem Volumen von 100 ml werden 30 g dieser Mischung und 1 g Schaumstabilisator Tegostab® B 8870 (Evonik Goldschmidt GmbH) eingewogen. Im Anschluss werden 5 g Butan als Treibmittel zugesetzt. Nach gründlichem Schütteln zur Durchmischung entsteht eine homogene, niedrigviskose und helle Flüssigkeit. Anschließend wird durch Öffnen des am Druckbehälter befindlichen Ventils die Masse als Schaum ausgetragen, der bei Raumtemperatur innerhalb von 5 Minuten klebfrei und nach 12 Stunden ausgehärtet ist.

### 2. Herstellung von Beschichtungen:

### Beispiel 2.1:

Zur Herstellung einer homogenen härtbaren Mischung werden 225 g Trialkoxysilylpolyether 3, 6 g Dibutylzinndilaurat und 75 g eines Polypropylenglykols der mittleren Molmasse 25000 g/mol bei 30 °C bis zum Erhalt einer klaren Lösung verrührt. Eine solche Mischung ist unter Feuchtigkeitsausschluss bei Raumtemperatur über mehrere Monate lagerstabil und niedrig viskos.

Das Gemisch wird in eine rechteckige Gießform gefüllt, so dass sich eine Schichtdicke von 3 mm ergibt. Das System beginnt bei Raumtemperatur im Kontakt mit Luftfeuchtigkeit (rel. Feuchte 60 %) zu härten. Es entsteht eine mit der Zeit immer höher viskos werdende und sich schließlich verfestigende Polymerbeschichtung, die nach 48 h durchgehärtet ist.

### Beispiel 2.2:

Zur Herstellung einer härtbaren Mischung werden 200 g Trialkoxysilylpolyether 4 und 20 g einer 10 Gew.-%igen Lösung von Methansulfonsäure in Polypropylenglykol der mittleren Molmasse 1100 g/mol bei 30 °C bis zum Erhalt einer klaren Lösung verrührt. Anschließend werden 10 g einer pyrogenen Kieselsäure (Aerosil® R 972 von Evonik Degussa GmbH) zugegeben und 3 Stunden gerührt bis eine homogene Masse entsteht.

Wie zuvor im Beispiel 2.1 wird das Gemisch wird in eine rechteckige Form gegossen, so dass sich eine Schichtdicke von 3 mm ergibt. Das System beginnt bei Raumtemperatur im Kontakt mit Luftfeuchtigkeit (rel. Feuchte 60 %) zu härten. Es entsteht eine mit der Zeit immer höher viskos werdende und sich schließlich verfestigende Polymerbeschichtung, die nach 48 h durchgehärtet ist.

## Patentansprüche

1. Härtbare, schäumbare Zusammensetzungen enthaltend Alkoxysilanpolyether der Formel (1) mit mehr als einer Alkoxysilylfunktion pro gegenüber Epoxidgruppsen reaktivem Kettenende 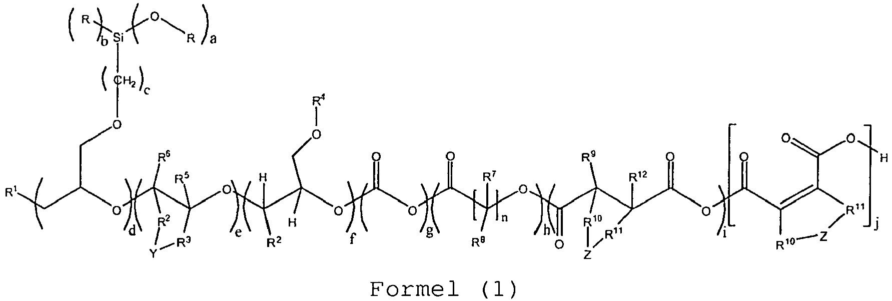 wobei
a eine ganze Zahl von 1 bis 3 ist,
b eine ganze Zahl von 0 bis 2 ist, und die Summe von a und b gleich 3 ist,
c eine ganze Zahl von 0 bis 22 ist,
d eine ganze Zahl von größer 1 bis 1.000 ist,
e eine ganze Zahl von 0 bis 10.000 ist,
f eine ganze Zahl von 0 bis 1.000 ist,
g eine ganze Zahl von 0 bis 1.000 ist,
h, i und j ganze Zahlen von 0 bis 500 ist, und mit der Maßgabe, dass die Fragmente mit den Indices d bis j untereinander frei permutierbar, d.h. in der Sequenz innerhalb der Polyetherkette gegeneinander austauschbar sind,
n eine ganze Zahl zwischen 2 und 8 ist und
R einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt,
R¹ gleich einem gesättigten oder ungesättigten, unverzweigtem oder verzweigten Rest, oder einen Polyetherrest vom Typ einer Alkoxy-, Arylalkoxyoder Alkylarylalkoxygruppe darstellt, bei der die Kohlenstoffkette durch Sauerstoffatome unterbrochen sein kann, oder R¹ eine einfach oder mehrfach annelierte aromatische Gruppe ist, an die eine phenolische OH-Gruppe direkt gebunden ist,
R² oder R³, sowie R⁵ oder R⁶ gleich oder auch unabhängig voneinander H oder ein gesättigter oder ungesättigter, ein- oder mehrwertiger Kohlenwasserstoffrest ist, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20 Kohlenstoffatomen; R²-R³ kann eine -CH₂CH₂CH₂CH₂-Gruppe, Y damit eine -(CH₂CH₂-)-Gruppe sein und die Kohlenwasserstoffreste R² und R³ können ihrerseits weiter substituiert sein und funktionelle Gruppen wie Halogene, Hydroxylgruppen oder Glycidyloxypropylgruppen tragen,
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann,
R⁷ und R⁸ sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden,
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann, wobei Z sowohl einen divalenten Alkylen- als auch Alkenylenrest darstellen kann
und ein oder mehrere Treibmittel.

2. Härtbare Zusammensetzungen gemäß Anspruch 1, **dadurch gekennzeichnet, dass** die Alkoxysilanpolyether mehr als eine Trialkoxysilylfunktion pro gegenüber Epoxidgruppen reaktivem Kettenende aufweisen.

3. Härtbare Zusammensetzungen gemäß zumindest einem der Ansprüche 1 oder 2 verwendbar als schäumbares Klebemittel.

4. Härtbare Zusammensetzung nach zumindest einem der Ansprüche 1 bis 3, **dadurch gekennzeichnet, dass** die schäumbare Zusammensetzung weitere Komponenten, die ausgewählt werden aus Silanen, Füllstoffen, Lösungsmitteln, Schaumstabilisatoren sowie Katalysatoren zur Beschleunigung der Aushärtung des Schaumes enthält.

5. Verfahren zur Beschichtung von Oberflächen **dadurch gekennzeichnet, dass** eine härtbare und schäumbare Zusammensetzung gemäß einem der Ansprüche 1 bis 4 eingesetzt wird.

6. Verfahren gemäß Anspruch 5, **dadurch gekennzeichnet, dass** eine härtbare Zusammensetzung enthaltend ein Alkoxysilanpolyether gemäß der Formel (1) nach Anspruch 1 auf die zu behandelnde Oberfläche appliziert und ausgehärtet wird.

7. Verfahren gemäß Anspruch 6 oder 7 zum Verkleben von Oberflächen oder dreidimensionalen Verbundwerkstoffen, bei dem eine härtbare und schäumbare Zusammensetzung gemäß zumindest einen der Ansprüche 1 bis 5 zwischen den zu verklebenden Oberflächen zu einem Schaum verschäumt wird, oder aber bei dem der aus der Zusammensetzung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

8. Klebstoffe, Dichtstoffe, Bindestoffe und/oder Fugendichtstoffe enthaltend Zusammensetzungen nach zumindest einem der Ansprüche 1 bis 4.

9. Klebstoffe, Dichtstoffe, Bindestoffe und/oder Fugendichtstoffe nach Anspruch 8, **dadurch gekennzeichnet, dass** unterschiedliche Untergründe damit verklebt und/oder abgedichtet und/oder verbunden werden können.

## Claims

1. Curable, foamable composition containing alkoxysilane polyethers of the formula (1) having more than one alkoxysilyl function per chain end reactive towards epoxide groups 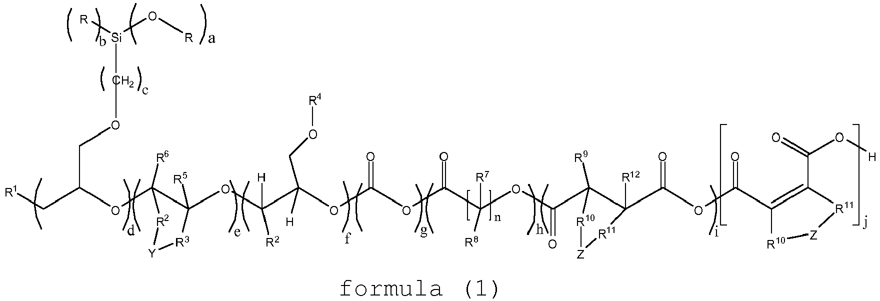 where
a is an integer from 1 to 3,
b is an integer from 0 to 2, and the sum of a and b is 3,
c is an integer from 0 to 22,
d is an integer from greater than 1 to 1000,
e is an integer from 0 to 10 000,
f is an integer from 0 to 1000,
g is an integer from 0 to 1000,
h, i and j are integers from 0 to 500, and with the proviso that the fragments having the indices d to j are freely permutable with one another, i.e. are interchangeable in the sequence within the polyether chain,
n is an integer between 2 and 8; and
R represents one or more identical or different radicals selected from linear or branched, saturated, singly or multiply unsaturated alkyl radicals having 1 to 20 carbon atoms or haloalkyl groups having 1 to 20 carbon atoms,
R¹ represents a saturated or unsaturated, unbranched or branched radical or a polyether radical of the type of an alkoxy, arylalkoxy or alkylarylalkoxy group, in which the carbon chain may be interrupted by oxygen atoms, or R¹ is a singly or multiply fused aromatic group to which a phenolic OH group is directly attached,
R² or R³, and also R⁵ or R⁶, is or else independently of one another are each H or a saturated or unsaturated, monovalent or polyvalent hydrocarbon radical, the radicals R⁵ or R⁶ being a monovalent hydrocarbon radical and it being possible for the hydrocarbon radical to be bridged cycloaliphatically via the fragment Y; Y may be absent, or else may be a methylene bridge having 1 or 2 methylene units; if Y is absent, then R² or R³ independently of one another are each a linear or branched radical having 1 to 20 carbon atoms; R²-R³ may be a -CH₂CH₂CH₂CH₂- group, Y thus being a -(CH₂CH₂-)- group and the hydrocarbon radicals R² and R³ may in turn be further substituted and carry functional groups such as halogens, hydroxyl groups or glycidyloxypropyl groups,
R⁴ is a linear or branched alkyl radical of 1 to 24 carbon atoms or an aromatic or cycloaliphatic radical which if appropriate may, in turn, carry alkyl groups,
R⁷ and R⁸ are independently of one another either hydrogen or alkyl, alkoxy, aryl or aralkyl groups which are copolymerized by ring-opening polymerization to give crosslinkable polyether esters containing alkoxysilane groups,
R⁹, R¹⁰, R¹¹ and R¹² are independently of one another either hydrogen, alkyl, alkenyl, alkoxy, aryl or aralkyl groups, it being possible for the hydrocarbon radical to be bridged cycloaliphatically or aromatically via the fragment Z, Z being either a divalent alkylene radical or alkenylene radical and one or more blowing agents.

2. Curable composition according to claim 1, **characterized in that** the alkoxysilane polyethers contain more than one trialkoxysilyl function per chain end reactive towards epoxide groups.

3. Curable composition according to at least one of claims 1 or 2, which can be used as a foamable adhesive bonding composition.

4. Curable composition according to at least one of claims 1 to 3, **characterized in that** the foamable composition contains further components selected from silanes, fillers, solvents, foam stabilizers and catalysts for accelerating the curing of the foam.

5. Method of coating surfaces, **characterized in that** a curable and foamable composition according to one of claims 1 to 4 is used.

6. Method according to claim 5, **characterized in that** a curable composition containing an alkoxysilane polyether in accordance with the formula (1) according to claim 1 is applied to the surface to be treated and is cured.

7. Method according to claim 6 or 7 of adhesively bonding surfaces or three-dimensional composite materials, in which a curable and foamable composition according to at least one of claims 1 to 5 is foamed between the adherend surfaces to form a foam or else in which the foam which can be prepared from the composition, after foaming, is applied to one of the adherend surfaces or between the adherend surfaces, and the foam is subsequently compressed between the adherend surfaces.

8. Adhesive, sealant, binder and/or joint sealant containing a composition according to at least one of claims 1 to 4.

9. Adhesive, sealant, binder and/or joint-sealant according to claim 8, **characterized in that** different substrates can be adhesively bonded and/or sealed and/or joined therewith.

## Revendications

1. Compositions moussables durcissables contenant un polyéther d'alcoxysilane de formule (1) comprenant plus d'une fonction alcoxysilyle par extrémité de chaîne réactive avec les groupes époxyde 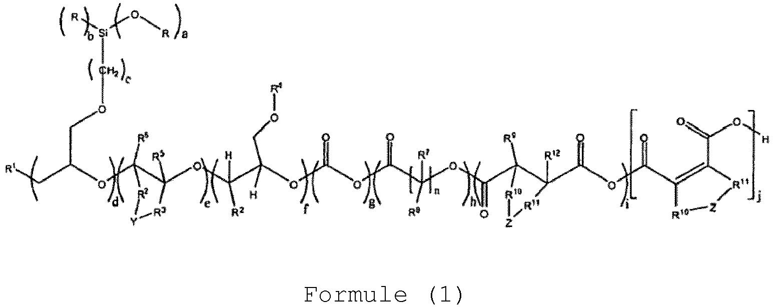 dans laquelle
a signifie un nombre entier de 1 à 3,
b signifie un nombre entier de 0 à 2, et la somme de a et b est de 3,
c signifie un nombre entier de 0 à 22,
d signifie un nombre entier de plus de 1 à 1 000,
e signifie un nombre entier de 0 à 10 000,
f signifie un nombre entier de 0 à 1 000,
g signifie un nombre entier de 0 à 1 000,
h, i et j signifient des nombres entiers de 0 à 500,
à condition que les fragments d'indice d à j soient librement permutables les uns avec les autres, c.-à-d. qu'ils puissent être remplacés les uns par les autres dans la séquence de la chaîne polyéther,
n signifie un nombre entier compris entre 2 et 8, et
R représente un ou plusieurs radicaux identiques ou différents, choisis parmi les radicaux alkyle linéaires ou ramifiés, saturés, mono- ou polyinsaturés, de 1 à 20 atomes de carbone, ou les groupes halogénoalkyle de 1 à 20 atomes de carbone,
R¹ représente un radical saturé ou insaturé, non ramifié ou ramifié, ou un radical polyéther du type d'un groupe alcoxy, arylalcoxy ou alkylarylalcoxy, dans lequel la chaîne carbonée peut être interrompue par des atomes d'oxygène, ou R¹ est un groupe aromatique mono- ou poly-annelé, auquel un groupe OH phénolique est directement relié,
R² ou R³, ainsi que R⁵ ou R⁶ représentent de manière identique ou également indépendamment les uns des autres H ou un radical hydrocarboné saturé ou insaturé, mono- ou polyvalent, les radicaux R⁵ ou R⁶ représentant un radical hydrocarboné monovalent et le radical hydrocarboné pouvant être ponté de manière cycloaliphatique par le fragment Y ; Y peut ne pas être présent, ou bien être un pont méthylène à 1 ou 2 unités méthylène ; si Y n'est pas présent, R² ou R³ sont indépendamment les uns des autres un radical linéaire ou ramifié de 1 à 20 atomes de carbone ; R²-R³ peut être un groupe -CH₂CH₂CH₂CH₂-, Y étant par conséquent un groupe -(CH₂CH₂-), et les radicaux hydrocarbonés R² et R³ peuvent être davantage substitués de leur côté, et porter des groupes fonctionnels tels que des halogènes, des groupes hydroxyle ou des groupes glycidyloxypropyle,
R⁴ correspond à un radical alkyle linéaire ou ramifié de 1 à 24 atomes de carbone ou un radical aromatique ou cycloaliphatique, qui peut éventuellement de son côté porter des groupes alkyle,
R⁷ et R⁸ sont indépendamment les uns des autres l'hydrogène, des groupes alkyle, alcoxy, aryle ou aralkyle, qui peuvent être copolymérisés par polymérisation par ouverture de cycle en polyétheresters contenant des groupes alcoxysilane réticulables, R⁹, R¹⁰, R¹¹ et R¹² sont indépendamment les uns des autres l'hydrogène, des groupes alkyle, alcényle, alcoxy, aryle ou aralkyle, le radical hydrocarboné pouvant être ponté de manière cycloaliphatique ou aromatique par le fragment Z, Z pouvant représenter aussi bien un radical alkylène bivalent qu'alcénylène,
et un ou plusieurs agents gonflants.

2. Compositions durcissables selon la revendication 1, **caractérisées en ce que** les polyéthers d'alcoxysilane comprennent plus d'une fonction trialcoxysilane par extrémité de chaîne réactive avec les groupes époxyde.

3. Compositions durcissables selon au moins l'une quelconque des revendications 1 ou 2, utilisables en tant qu'adhésifs moussables.

4. Compositions durcissables selon au moins l'une quelconque des revendications 1 à 3, **caractérisées en ce que** la composition moussable contient d'autres composants, qui sont choisis parmi les silanes, les charges, les solvants, les stabilisateurs de mousse et les catalyseurs pour accélérer le durcissement de la mousse.

5. Procédé de revêtement de surfaces, **caractérisé en ce qu'**une composition durcissable et moussable selon l'une quelconque des revendications 1 à 4 est utilisée.

6. Procédé selon la revendication 5, **caractérisé en ce qu'**une composition durcissable contenant un polyéther d'alcoxysilane de formule (1) selon la revendication 1 est appliquée sur la surface à traiter et durcie.

7. Procédé selon la revendication 6 ou 7, pour le collage de surfaces ou de matériaux composites tridimensionnels, selon lequel une composition durcissable et moussable selon au moins l'une quelconque des revendications 1 à 5 est moussée en une mousse entre les surfaces à coller, ou selon lequel la mousse pouvant être fabriquée à partir de la composition est appliquée après le moussage sur une des surfaces à coller ou entre le surfaces à coller, puis la mousse est pressée entre les surfaces à coller.

8. Adhésifs, matériaux d'étanchéité, liants et/ou matériaux d'étanchéité pour joints contenant des compositions selon au moins l'une quelconque des revendications 1 à 4.

9. Adhésifs, matériaux d'étanchéité, liants et/ou matériaux d'étanchéité pour joints selon la revendication 8, **caractérisés en ce qu'**ils permettent de coller et/ou étanchéifier et/ou relier différents substrats.
